# EUROPEAN PATENT SPECIFICATION

(11) **EP 2 103 372 B1**
(45) Date of publication and mention of the grant of the patent: **14.05.2014**
(21) Application number: 09155133.3
(22) Date of filing: 13.03.2009
(51) Int. Cl.: B23D 47/12, B27B 5/14

(54) **Annular saw device**
Ringkreissägevorrichtung
Dispositif de scie annulaire

(30) Priority: 14.03.2008 US 48983
(43) Date of publication of application: 23.09.2009
(73) Proprietor: Campeau, Stéphane, Limoges, ON K0A 2M0 (CA); Bechamp, Paul, Gatineau QC J8P 0A9 (CA); Gareau, Jacques, Ottawa, Ontario K1B 4J4 (CA)
(72) Inventor: Campeau, Stéphane, Limoges K0A 2M0 (CA); Bechamp, Paul, Gatineau J8R 2R8 (CA)
(74) Representative: Delorme, Nicolas

(56) References cited:
- EP-A- 0 060 971
- DE-C- 30 017
- FR-A- 804 061
- FR-A- 2 674 469
- US-A- 2 572 065
- US-A- 5 545 079
- US-A- 5 674 119

## Description

### FIELD OF THE INVENTION

The present invention relates to a centerless cutting assembly according to the preamble of claim 1 and to a centerless saw device according to the preamble of claim 10. Such devices are known from US 2,572,065 A1.

### BACKGROUND OF THE INVENTION

Circular saw devices typically involve a circular or disc blade having an axial perforation or hole in its center. The blade is mounted to the saw using a shaft extending through the center hole and rotation thereof is driven by holding members concentrically mounted on the shaft and frictionally engaging the side faces of the blade,

Due to the presence of the shaft and of the holding members, the depth of cut of circular saws tends to be limited to less than the radius of blade. Therefore, some have come up with circular saw configurations where an annular blade is eccentrically driven. Such a configuration is described in United States Patent Nos. 4,352,241, 4,472,880 and 4,793,065.

Briefly, these documents describe saw configurations where an annular blade is positioned between opposed rollers contacting the lateral faces of the blade. A driving roller in engaging the inner edge of the annular blade and rotation thereof drives the rotation of the blade about a virtual rotation axis. While such configurations allow increasing the depth of cut beyond the center of the blade, additional torque on the blade is required as the blade cuts deeper in the maternal. As the surface of the blade engaged by the drive rollers of the saw described in the prior art is very limited, slippage in-between the drive and saw blade have become a problem, thereby functionally limiting the depth of the cut. US patent No 5,674,119 describes a miniature hand held dental saw provided with an arched support that defines a small gap corresponding to the cutting area. Such a dental saw comprises a centerless cutting assembly as defined in the preamble of claim 1.

Other annular saw configuration have been reported, where an annular blade is driven by a roller frictionally engaging one lateral face of the blade. Again, these configurations of the prior art tend to be unsatisfactorily since they do not overcome torque-related issues.

It would thus be advantageous to be provided with an annular saw capable of cutting beyond the rotation axis or center of the annular blade while maintaining sufficient torque between the drive rollers and the blade to satisfactorily enable such cutting depth.

### SUMMARY OF THE INVENTION

In order to address the above and other drawbacks, and in accordance with the present invention, there is disclosed a centerless cutting assembly according to claim 1 and a centerless saw device according to claim 10. Further preferred embodiments are defined by the features of dependent claims 2-9 and 11.

These and other objects, advantages and features of the present invention will become more apparent to those skilled in the art upon reading the details of the invention more fully set forth below.

### BRIEF DESCRIPTION OF THE DRAWINGS

Having thus generally described the nature of the invention, reference will now be made to the accompanying drawings, showing by way of illustration an illustrative embodiment thereof, and in which;

FIG. 1 is a front left perspective view of a centerless saw device according to one embodiment of the present invention;

FIG. 2 is a right elevation view of the centerless saw device shown in FIG. 1;

FIG. 3 is a left elevation view of the centerless saw device shown in FIG. 1;

FIG. 4 is a top plan view of the centerless saw device shown in FIG. 1;

FIG. 5 is a front left perspective view of the centerless saw device shown in FIG. 1, with the cutting assembly removed from the frame;

FIG. 6 is a front right perspective view of a cutting assembly in accordance with one embodiment of the present invention;

FIG. 7 is a front right perspective view of the cutting assembly, shown in FIG. 6, with the blade and one drive roller disassembled;

FIG. 8 is an exploded view of the cutting assembly shown in FIG. 6;

FIG. 9 is a front left perspective view of a bevel gear assembly according to one embodiment of the present invention;

FIG. 10 is a bottom cross-section view of bevel gear and spur gears assemblies according to one embodiment of the present invention;

FIG. 11 is a front left perspective view of a pair of spur gears according to one embodiment of the present invention;

FIG. 12 is an enlarged exploded view of a cutting assembly, showing a spur gear housing, a mounting block and a pair of drive rollers, in accordance with one embodiment of the present invention;

FIG. 13 is a back elevation view of a spur gear assembly according to one embodiment of the present invention;

FIG. 14 is a front elevation view of a cutting assembly in accordance with one embodiment of the present invention, showing the spur gear housing in an upward position;

FIG. 15 is another a front elevation view of the cutting assembly shown in FIG. 14, showing the spur gear housing in a downward position;

FIG. 16 is an exploded view of a guide wheel assembly in accordance with one embodiment of the present invention; and

FIG. 17 is a partial cross-section view of the cutting assembly shown in FIG. 1, showing the blade engaged in the recesses of the guide wheels.

### DESCRIPTION OF THE ILLUSTRATIVE EMBODIMENTS

The description which follows, and the embodiments described therein are provided by way of illustration of an example, or examples of particular embodiments of principles and aspects of the present invention. These examples are provided for the purpose of explanation and not of limitation, of those principles of the invention. In the description that follows, like parts are marked throughout the specification and the drawings with the same respective reference numerals.

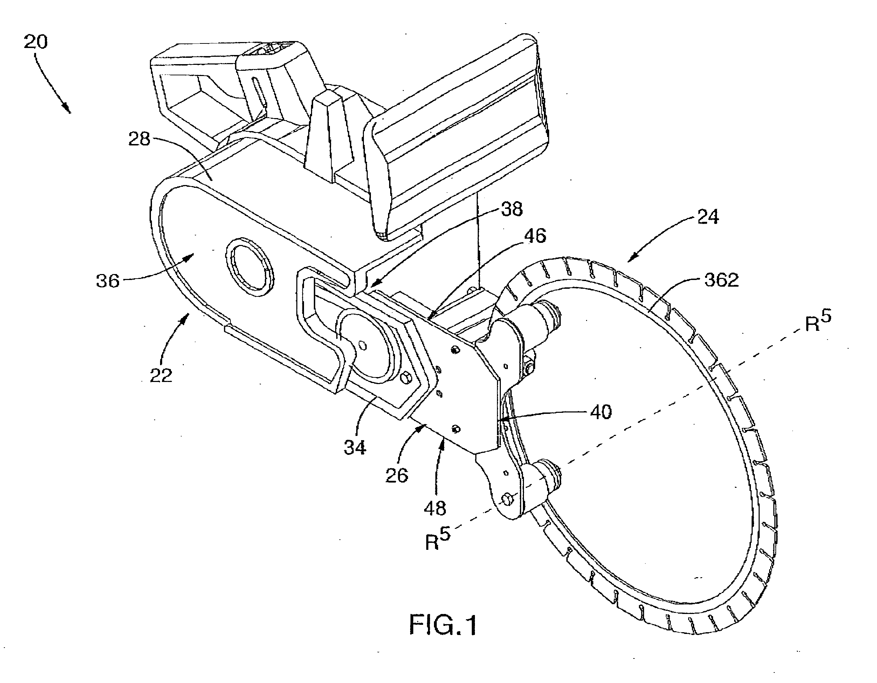

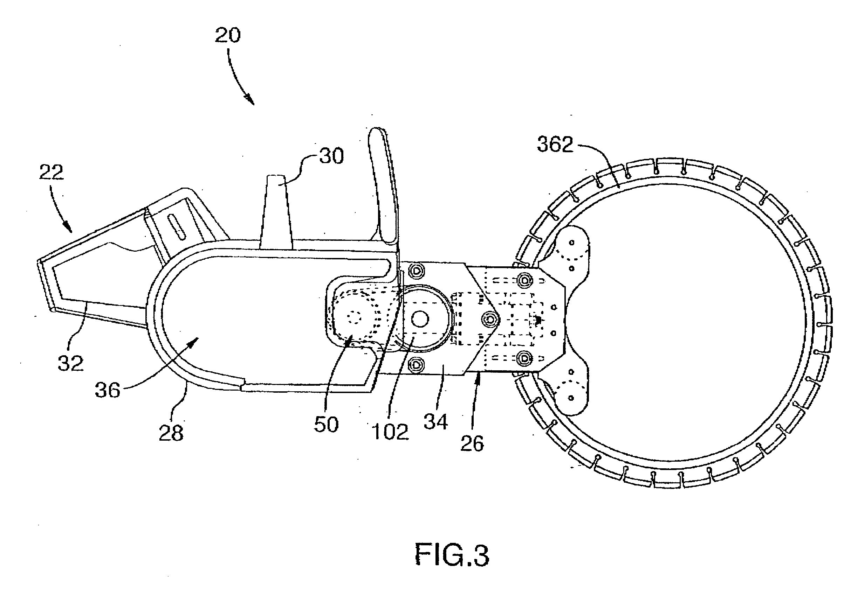

With reference to FIGS. 1 to 5, a centerless handheld saw according to one embodiment of the present invention is shown using reference numeral 20, In this embodiment, the saw 20 comprises a drive assembly 22 and a cutting assembly 24 mounted to the drive assembly 22 by a frame member 26.

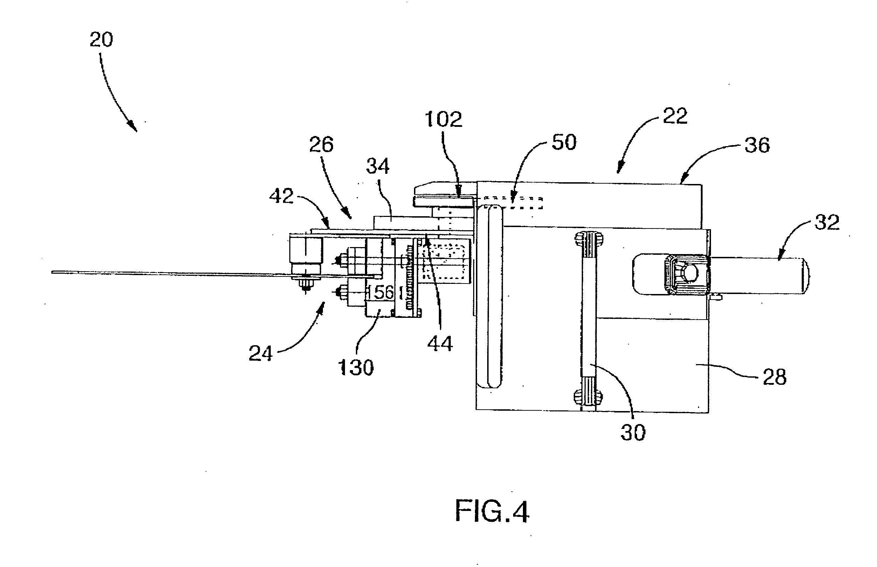

The drive assembly 22 comprises a gas motor (not shown) mounted in a housing 28. Provided on the housing 28 is a plurality of handles 30, 32 for maneuvering the saw 20 and controls (not shown) for controlling the throttle of the gas motor, and a bracket 34 for mounting the frame member 26 to the housing 28, as best described below. Extending from the left side 36 (i.e. the top side on FIG. 4) of the housing 28 is a drive shaft (not shown) having a first end coupled to the motor and a second end extending from the left side 36 of the motor housing 28.

The frame member 26 has a first, back end 38 fastened to the bracket 34 and a second, front end 40. The frame member 26 is provided with a first side 42 (i.e. the top side on FIG. 4) and a second, opposed side 44 (i.e. the bottom side on FIG. 4), a top edge 46 and a bottom edge 48. Proximal to the back end 38, the frame member 26 is provided with a plurality of holes (not shown) adapted for receiving theretrough a corresponding plurality of threaded fasteners (not shown) for fastening the frame member 26 to the bracket 34 of the housing 28. Further provided at the back end 38 of the frame member 26 is a shaft hole (not shown) extending between the first and second sides 42, 44 for receiving therethrough the second end of the drive shaft (not shown). Mounted to the second end of the drive shaft (not shown) is a first driving pulley 50 (shown in FIG. 4) for driving the cutting assembly 24, as it will become apparent below.

While in this embodiment the cutting assembly 24 is coupled to a handheld driving assembly, a person skilled in the art will appreciate that such a cutting assembly 24 may also be coupled to different types of drive assemblies. For instance, the cutting assembly 24 could be mounted in table saw or compound saw configurations. Further, the cutting assembly 24 may be configured to be driven, for instance, by an electric or a hydraulic motor.

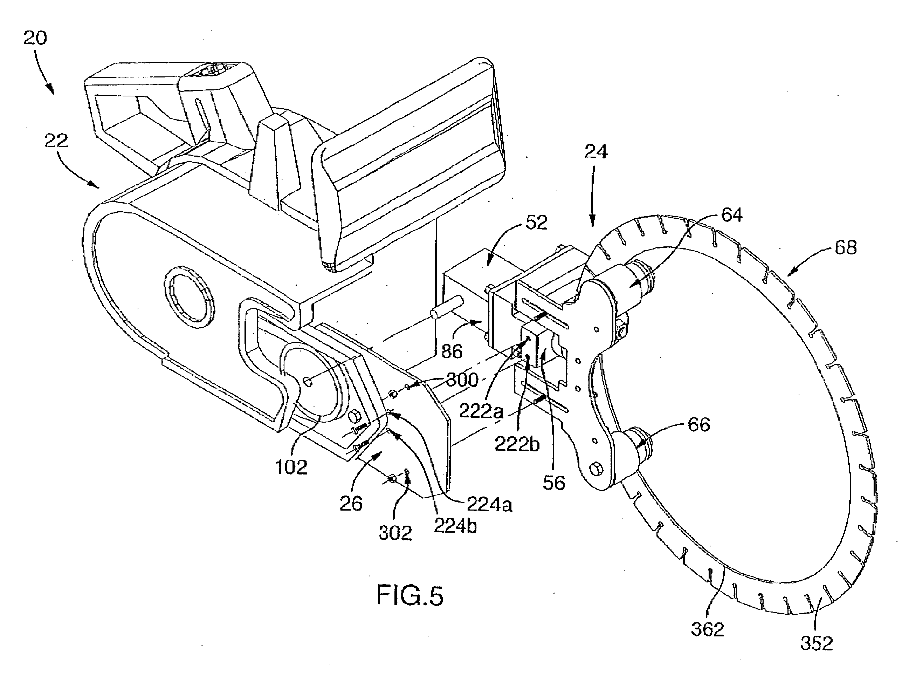

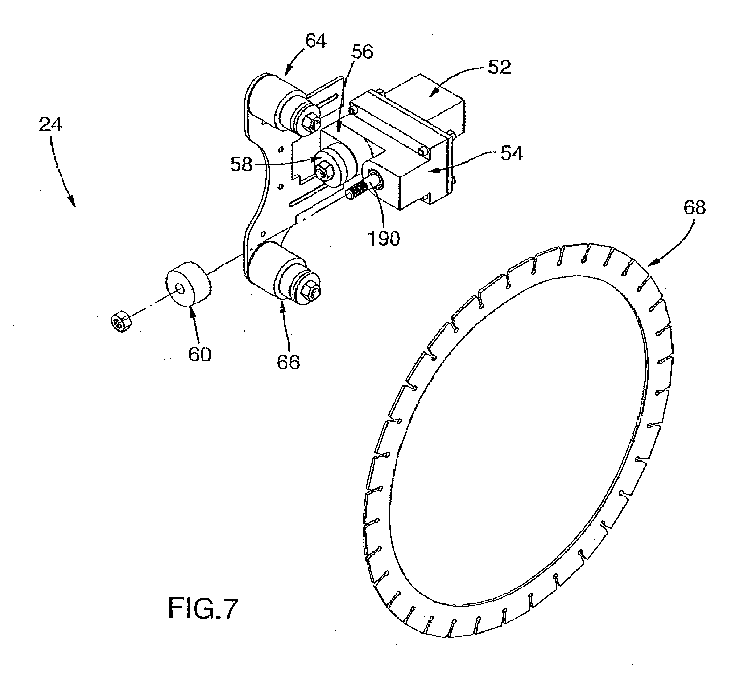

Now turning to FIGS 5 to 8, the cutting assembly 24 comprises, from upstream to downstream (i.e. from the back end 38 of the frame 26 toward the front end 40 thereof), a bevel gear assembly 52 mounted to the frame 26, a pivoting spur gear assembly 54 connected to the bevel gear assembly 52 and a mounting block 56 mounted to the frame 26 and connected to the pivoting spur gear assembly 52 as best described below. The cutting assembly 24 further comprises first and second driving rollers 58, 60 operatively connected to, and driven by the pivoting spur gear assembly 54, a guide mounting plate 62 mounted to the front end 40 of the frame 26 and a pair of guide assemblies 64, 66 mounted to the guide mounting plate 62, as it will become apparent below. Sandwiched between the driving rollers 58, 60 and retained by the guide rollers 64,66 is an annular blade 68.

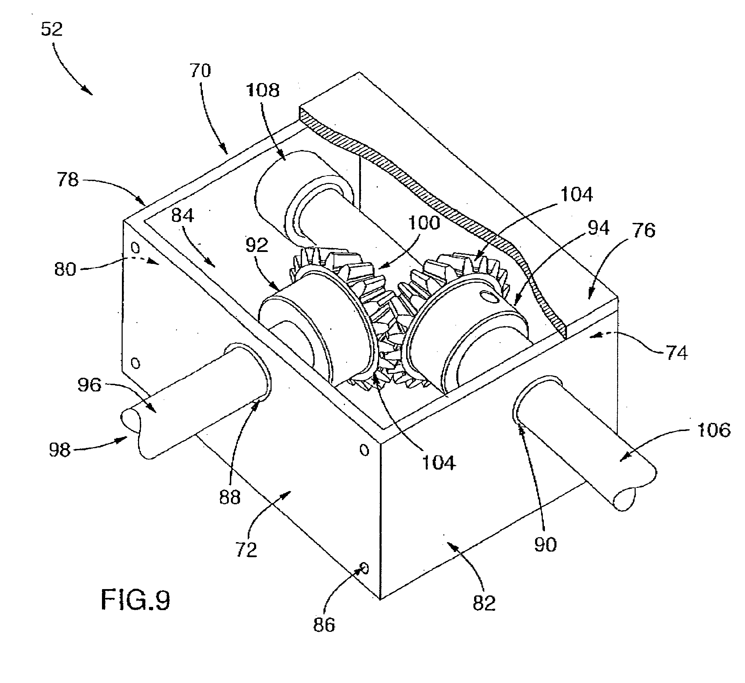

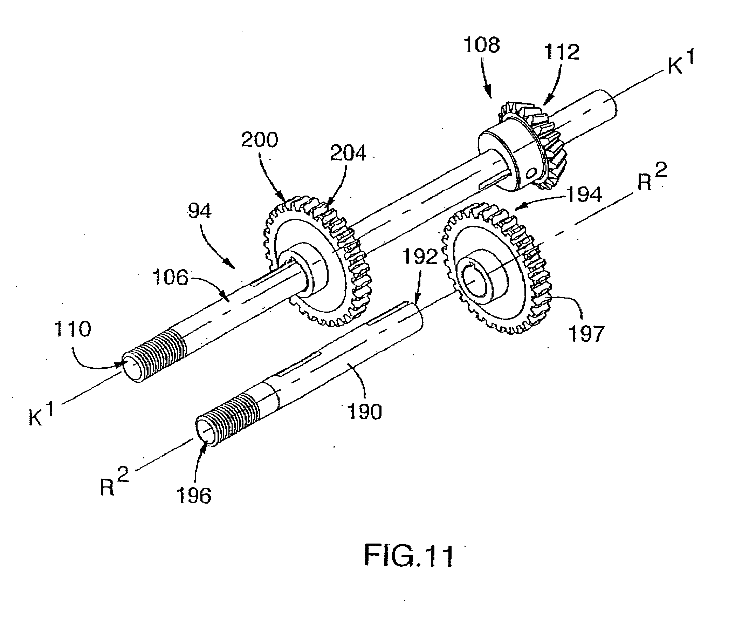

With reference to FIGS. 9 to 11, the bevel gear assembly 52 comprises a housing 70 made from a strong material such as metal. In one embodiment, the housing 70 is made from aluminum to provide strength thereto while minimizing weight. The housing has a first, left wall 72, a second, right wall 74, as well as top, bottom, back and front walls 76, 78, 80 and 82, defining together a chamber 84. On its left wall 72, the housing 70 is provided with four (4) threaded bores 86 four mounting housing 70 to the frame 26. More specifically, the threaded bores 86 are aligned with corresponding holes (not shown) on the frame 26 therefore allowing the use of threaded fasteners (not shown) for removably fastening the housing 70 to the frame 26. In this embodiment, the left wall 72 of the housing 70 adjoins the right side 44 of the frame 26 and the right wall 74 extends away from the same.

Defined in the left and front walls 72, 82 of the housing 70 are circular holes 88,90. The circular hole 88 of the left wall 72 is aligned with corresponding holes in the frame 26 and the bracket 34 (not shown), for allowing the passage of a first bevel gear 92 through the left wall 72 and the frame, 26, while the circular hole 90 of the front wall 82 allows the passage of a second bevel gear 94.

The first bevel gear 92 comprises a shaft 96 extending along a horizontal plan, perpendicular to plan of the left wall 72. The shaft 96 comprises a first end 98 extending through the circular hole 88 of the left wall 72 and protruding from the left face 42 of the frame 26, and a second end 100 located inside the chamber 84 of the housing 70. A second driving pulley 102 is mounted to the first end 98 of the shaft 96 in alignment with the first driving pulley 50 of the driving shaft of the motor (best shown in FIG. 4). The fist and second driving pulleys 50,102 are operatively connected to one another by a belt 103. As such, the rotation of the first driving pulley 50 will drive the rotation of the second pulley 102 and of the shaft 96 of the first bevel gear 92 connected thereto. Provided on the second end 100 of the shaft 96, inside the chamber 84, is conical beveled head 104.

The second bevel gear 94 also comprises a shaft 106. The shaft 106 extends along a horizontal plan, perpendicularly to the shaft 96 of the first bevel gear 92. The shaft 106 comprises a back end 108 located inside the chamber 84 and a front end 110 extending through the circular hole 90 of the front wall 82, toward the front end of the saw.

A second conical bevel head 112 is mounted proximal to the back end 108 of the shaft 106. The second bevel head 112 is adapted to operatively engage the first beveled head 104, the first and second bevel gears 92, 94 defining a pitch angle of approximately 90 degrees.

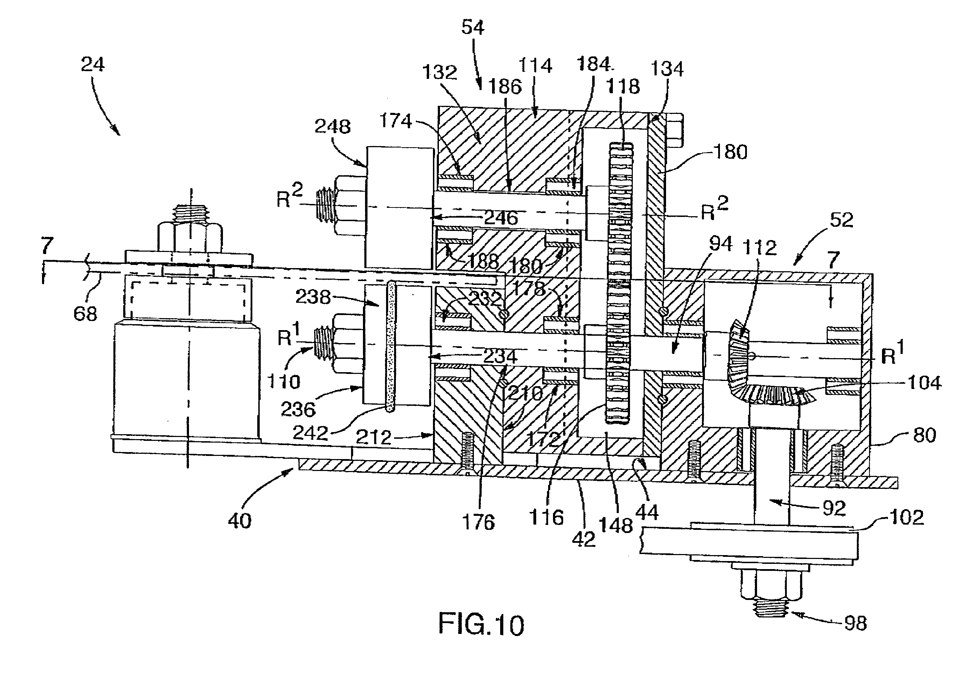

As best shown in FIG. 10, the front end 110 of the shaft 106 extends through the circular hole 90 of the front wall 82, towards the front end of the saw 20. As it will become apparent below, the front end 110 of the shaft 106 collaborates with the spur gear assembly 54 for driving rotation of the blade 68 and provides support for pivotably mounting the spur gear assembly 54 to the frame 26.

In one embodiment, the chamber 84 of the housing 70 is filled with a lubricant such as oil to minimize wear to the bevel gears 92,94 that may be occasioned while the saw 20 is operated. In this embodiment, bearings or seals may be used to prevent leakage that may occur through holes 88, 90, for instance.

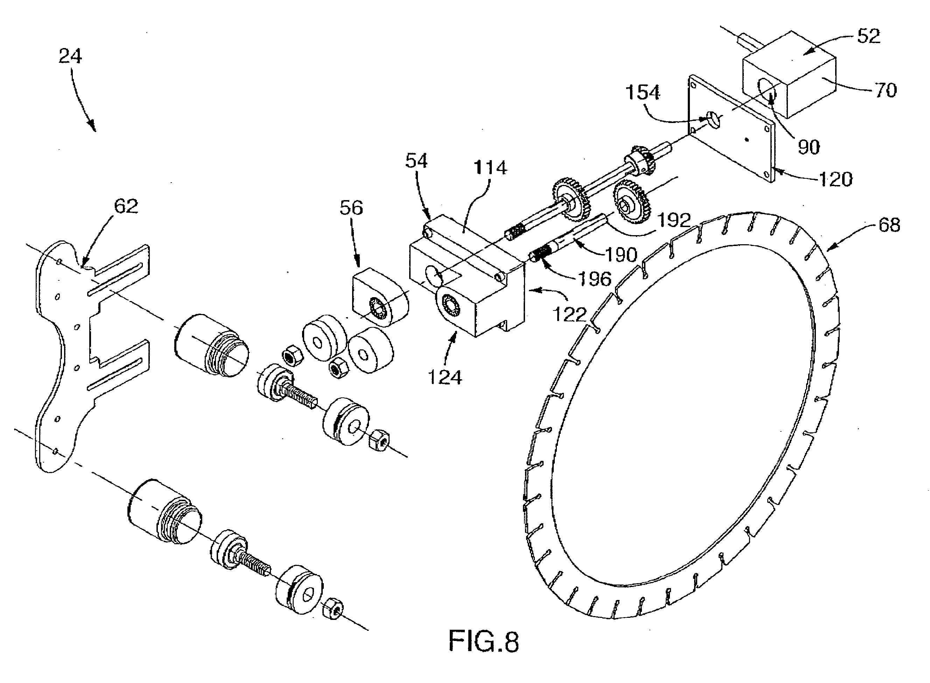

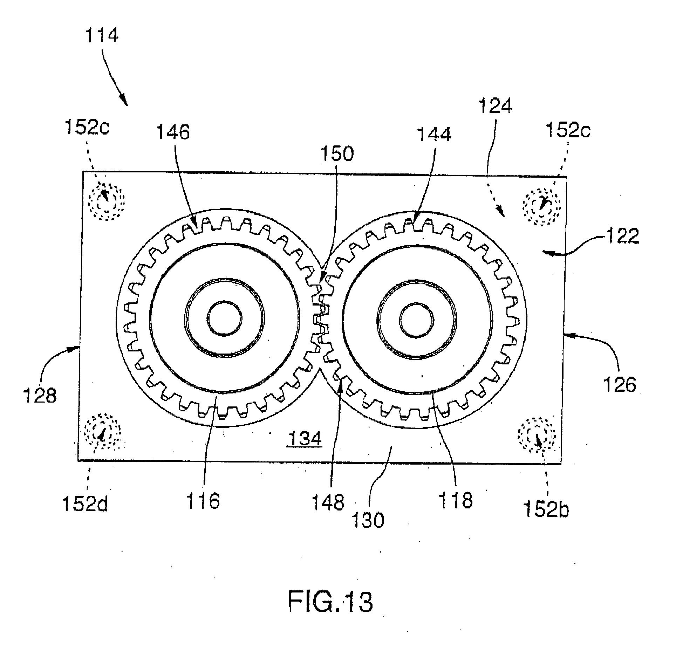

Connected to the bevel gear assembly 52 is the spur gear assembly 54 (shown in FIGS. 8 and 11 to 13). The spur gear assembly 54 comprises a housing 114 adapted for receiving therein a pair of spur gears 116,118 operatively connected to the shaft 106 of the second bevel gear 94 and a back plate 120 for closing the housing 114, as best described below.

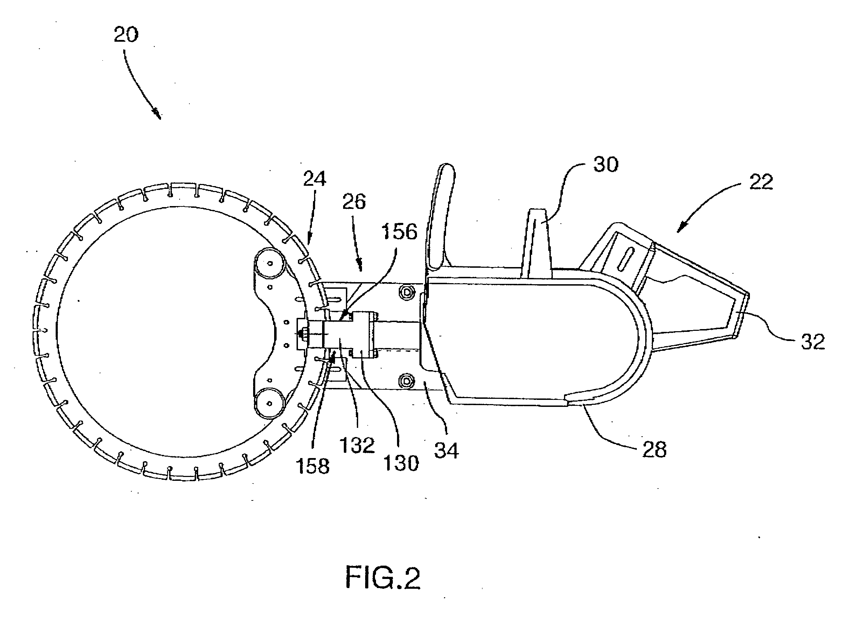

The housing 114 has a back end 122, a front end 124 and a pair of side faces 126,128. The housing 114 defines a generally rectangular back portion 130 (at the back end 122) and a generally L-shaped front portion 132 extending frontwardly from the back portion 130 (when seen from the top or the bottom, as best shown in FIGS. 4 and 10). Together, the back and front portions 130,132 defines a generally T-shaped cress-section when the housing 114 is seen from the left or right sides, as best shown in FIG. 2.

The back portion 130 of the housing 114 comprises a back face 134, a top front face 136 and a bottom front face 138 vertically spaced from the top front face 136. The back portion 130 further comprises a top face 140 and an opposed bottom face 142.

On the back face 134 is a pair of generally circular recesses 144,146 defining together a spur gear chamber 148 adapted for receiving therein the spur gears 116,118. The circular recesses 144,146 are positioned in a side-by-side relationship and portions thereof overlap to define a opening 150 for allowing the spur gears 116,118 to engage one another.

Extending from the front faces 136,138 of the back portion 130 to the back face 134 thereof are four (4) holes (not shown), each hole being located at one corner of the back portion 130. The holes, are adapted to collaborate with corresponding holes in the back plate 120 for receiving therein threaded fasteners 152a-152d, to thereby allow removably fastening the back plate 120 to the back face 134 of the spur gear housing 114.

Further through the back plate 120 is a circular hole adapted for receiving therein the front end 110 of the second bevel gear 94, as best described below. Once the spur gear assembly 54 is mounted to the frame 26, the back plate 120 is adjacent to the front wall 82 of the bevel gear housing 70.

The generally L-shaped front portion 132 of the housing 114 will now be described. In one embodiment of the present invention, the front portion 130 comprises a L-shaped top face 156, a L-shaped bottom face 158 and a first front face 160 extending between the top and bottom faces 156,158, from the left face 126 of the housing 114 to a first intermediate region 162 located between the left and right and side faces 126,128. The front portion 132 also comprises a curved lateral face 164 extending frontwardly from the first front face 160 in a perpendicular relationship thereto, at the intermediate location 162. Connecting the top and bottom faces 156,158 and extending between the lateral face 164 and the right side face 128 of the housing 114 is a second front face 166 defining the frontmost portion of the housing 114. In this embodiment, the second face is parallel to the first face 160 (i.e. perpendicular to the side faces 126,128 of the housing 114 respectively).

The L-shaps of the front portion 132 defines a seat 168 for receiving therein the mounting block 56 as it will be best described below. More specifically, the seat 168 is bordered by the first front face 166 (on the back of the seat 168) and by the lateral face 164 (on the right side of the seat 168).

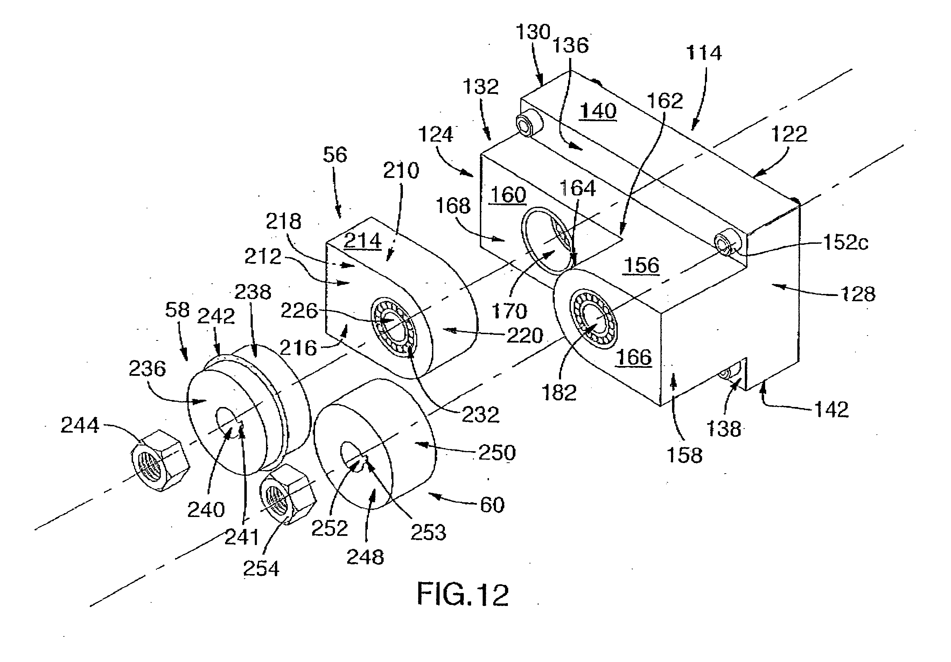

As best shown in FIGS. 10 and 12, the housing 114 is provided with a first flanged hole 170 extending axially from the circular recess 144 to the first front face 160 of the front portion 132. In one embodiment, the hole 170 and the recess 144 share a common axis R¹-R¹, perpendicular to the first front face 160 and located halfway between the top and bottom faces 156,158 of the front portion 132.

The flanged hole 170 comprises a circular back seat 172 extending frontwardly from the recess 144 and a main portion 176 extending between the back seat 172 and the first front face 160. The main portion 176 of the hole 170 has a diameter D¹ while the seat 172 has a larger diameter, D². Received in the seat 172 is an annular roller bearing 178 having an outer diameter corresponding to D² and an inner diameter corresponding to the diameter D¹ of the main portion 176. The presence of the bearing 178 is aimed at facilitating the rotation of the spur gear 116 during operation of the saw 20, as it will become apparent below.

The housing 114 is further provided with a second flanged hole 182 extending from the recess 146 to the second front face 166 of the front portion 132. Similarly to the first flange hole 170, the second flanged hole 182 extends axially from the recess 146 and share a common axis R²-R² therewith, perpendicular to the second front face 166 and located halfway between the top and bottom faces 156,158 of the front portion 132. In one embodiment, the axes R¹-R¹ and R²-R² of the holes 170,182 extend parallel to one another and are aligned along a horizontal plan.

The second flanged hole 182 comprises a circular back seat 184 extending frontwardly from the recess 146, a front seat 174 extending backwardly from the second front face 166 and a main portion 186 extending between the back and front seats 184, 174. The main portion 186 of the hole 182 has a diameter D¹ while the seats 184 have a larger diameter, D². Received in the seats 184, 174 are annular roller bearings 188, 180 similar to the bearing 178. As such, the bearings 188, 180 each have an outer diameter corresponding to D² and an inner diameter corresponding to the diameter D¹ of the main portion 186.

In one embodiment, the spur gear housing 114 is monolithic housing machined from a single block of aluminum. A person skilled in the art will however appreciate that the back and front portions of such housing may be distinct components assembled to one another by welding, screws or nuts and bolts.

Mounted for rotation in the spur gear housing 114 are the spur gears 116,118. The spur gear 116 (i.e. the lower spur gear on FIG. 10) comprises a disk gear head 200 configured to fit within the circular recess 144. In one embodiment, the gear head 200 comprises circular hole 202 extending axially along the axis R¹-R¹. The gear head 200 is further provided with a key way 203 extending radially on one side of the hole 202, for receiving therein a projection 205 extending radially on the shaft 106 of the second bevel gear 94. The gear head 200 also comprises a plurality of teeth 204. As best shown in FIG. 10, the shaft 106 of the second bevel gear 94 extends through the hole 154 of the back plate 120, the hole 202 of the gear head 200 and the hole 182 of the housing 114.

The spur gear 118 (i.e. the spur gear on the top on FIG. 10) comprises a cylindrical shaft 190 extending through the flanged hole 186 along the axis R²-R² and the bearings 188, 180. The shaft 190 and has a back end 192 located in the recess 146 of the housing 114 to which is operatively mounted a disk gear head 194, and a threaded front end 196. The treaded front end 196 protrudes frontwardly from the second front face 166 for mounting the second drive roller 60 thereto, as best described below similarly to the gear head 200, the gear head 194 comprises a circular hole 193 and a key way 195 extending radially on one side of the hole 193, for receiving therein a projection 199 extending radially on the shaft 190. The disk gear head 194 also comprises a plurality of teeth 197 and is configured to fit within the circular recess 146.

The gear heads 200 and 194 are positioned in the recesses 144 and 146, respectively for the teeth 204 of the gear head 200 to engage the teeth 197 of the gear head 194. The protrusion (not shown) of the shaft 106 engages the channel (not shown) of the gear head 200, therefore, causing the rotation of the gear head 200 in a same direction (e.g. clockwise), which in turn drives the rotation of the other gear head 194 in the opposite direction (e.g. counterclockwise). In one embodiment of the present invention, the spur gears have a 1:1 ratio two provide a synchronized rotation of the gears 116,118. In this embodiment, the chamber 148 is filled with oil for lubricating the spur gears 116,118 and keeping sludge from entering the spur gear assembly 54.

Mounted in the seat 168 of the housing 114 is the mounting block 56. The mounting block 56 has a back face 210, a front face 212 and top and bottom faces 214,216. The mounting block 56 also comprises a left flat face 218 and a curved right face 220. On the left flat face 218, the mounting block 56 is provided with a pair of spaced apart threaded bores 222a,222b (shown in FIG. 5) for mounting the block 56 to the frame 26. More specifically, the frame 26 is provided with a pair of holes 224a,224b extending from the left face 42 to the right face 44 of the frame 26. Once in position, the threaded bores 222a,222b of the mounting block 56 are aligned with the corresponding holes 224a,224b of the frame 26, therefore allowing screws to engage the threads of the bores 222a,222b for securing the mounting block 56 to the frame. As it will become apparent below, the holes 224a,224b of the frame 26 are positioned such that the mounting block 56 is received within the seat 168 of the spur gear housing 114 and provides support for the front end 110 of the shaft 106 of the bevel gear 94.

A circular flanged hole 226 extends between the back and front face 210,212 of the mounting block 56. The flanged hole 226 comprises a main portion having a diameter D¹ and a circular front seat (not shown) extending backwardly from the front face 212. The seat 230 has a larger diameter, D². Received in the seat (not shown), is an annular roller bearing 232 having an outer diameter corresponding to D² and an inner diameter corresponding to the diameter D¹ of the main portion (not shown). In one embodiment, the depth of the mounting block 56 (i.e. the distance between the back and front faces 210,212) corresponds to the depth of the seat 168 of the spur gear housing 114 (i.e. the distance between the first and second front faces 160,166).

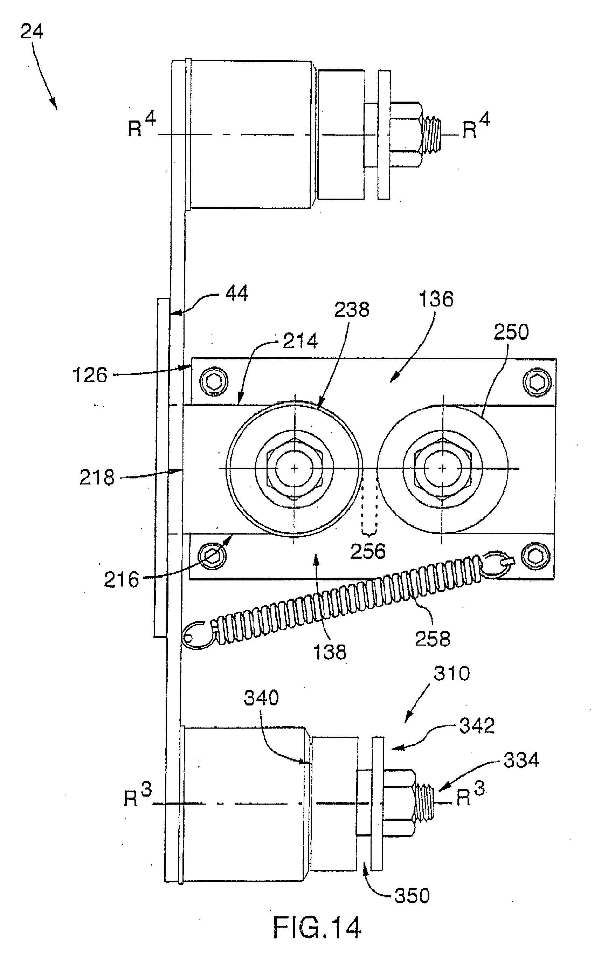

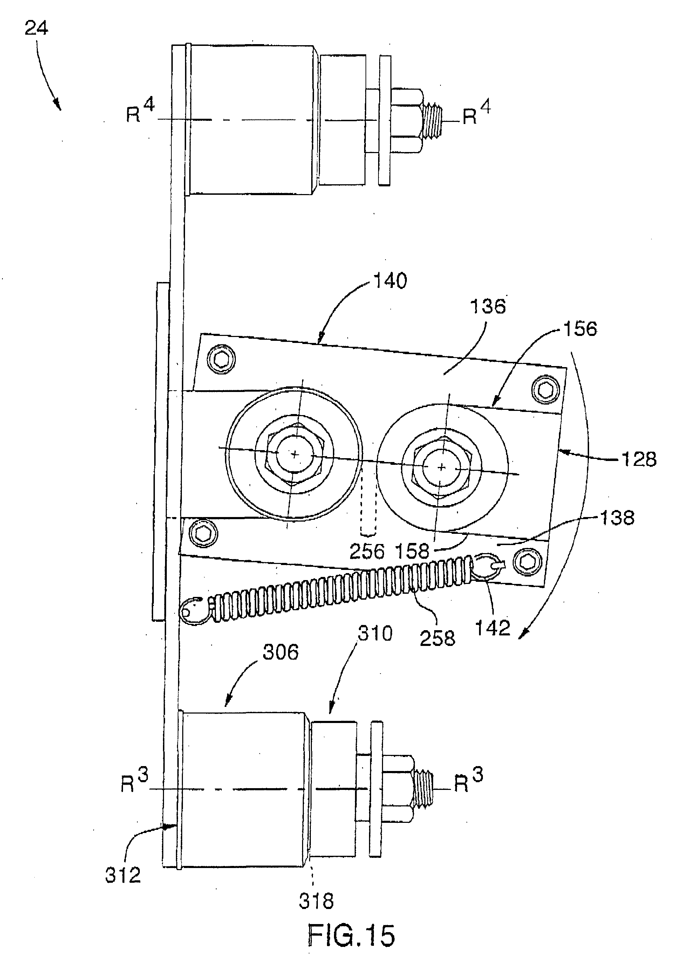

As best shown in FIGS. 10, 14 and 15, the left face 126 of the spur gear housing 114 and the back plate 120 mounted thereto are spaced apart from the right face 44 of the frame 26. The housing 114 and the back plate 120 mounted thereto are not attached to the frame 26 but are rather sandwiched between the bevel gear housing 114 and the mounting block 56. The housing 114 and the back plate 120 are maintained into position by the shaft 106 of the second bevel gear 94. As the shaft 106 of the second bevel gear 94 extends sequentially, from upstream to downstream, through the holes 90, 170 and 226, of the front wall 82 of the bevel gear housing 70 (mounted to the frame 26), the spur gear housing 114 and the mounting block 56 (also mounted to the frame 26), the housing 114 of the spur gear assembly 54 can pivot along the rotation axis R¹-R¹ of the second beveled gear 94. In other words, this configuration enables the right side of the spur gear housing 114 to pivot upwardly and downwardly between an upper position (shown in FIG. 14) and a lower position (shown in FIG. 15).

Still referring to FIGS. 14 and 15, a spring 258 is mounted by a first end to the bottom front face 138 of the housing 114, proximal to the right face 128 thereof, and by a second end to the frame 26. The spring 258 helps maintaining the housing 114 in its lower position (shown in FIG. 15, thereby ensuring proper contact between the drive rollers 58, 60 and the blade 68, as best described below.

Returning to FIG. 10, the front threaded end 110 of the shaft 106 of the second bevel gear 94 protrudes frontwardly from the front face 212 of the mounting block 56 for operatively mounting the drive roller 58 to the bevel gear 94, once the housing 114 and the mounting block 56 are mounted to the frame 26.

The drive roller 58 is a generally cylindrical body comprising a circular back face 234, a circular front face 236 and a curved face 238 extending therebetween. Extending axially from the back face 234 to the front face 236 is a circular hole 240 having a diameter D¹ and comprising a key way 241. An annular protrusion 242 extends radially on the curved face 238 of the roller 58 for guiding the annular blade 68, as it will become apparent below.

The roller 58 is mounted to the threaded end 110 of the shaft 106, the back face 234 thereof being adjacent to the front face 212 of the mounting block 56. The roller 58 is maintained into position using a bolt 244 fastened on the threaded front end 110 of the shaft 106. For ensuring proper rotation of the drive roller 58 along the axis R¹-R¹ while the shaft 106 is rotated, a projection 207 on the shaft 106 engages the key way 241.

Similarly to the drive roller 58, the drive roller 60 is a generally cylindrical body comprising a circular back face 246, a circular front face 248 and a curved face 250 extending therebetween. Extending axially from the back face 246 to the front face 248 is a circular hole 252 having a diameter D¹ comprising a key way 253. The roller 60 is mounted on the shaft 190, the back face 246 thereof being adjacent to the second front face 166 of spur gear housing 114 and the key way 253 engaging a projection 201. The drive roller 60 is maintained into position using a bolt 254 fastened on the threaded font end 196 of the shaft 190. For ensuring proper rotation of the drive roller 60 along the axis R²-R² while the shaft 190 is rotated, the projection 201 of the shaft 190 engages the key way 253.

A space 256 is defined between the curved faces 238, 250 of the drive rollers 58, 60 (best shown in FIGS. 14 and 15). This space 256 is adapted for the curved faces 238, 250 of the drive rollers 58, 60 to frictionally engage the annular blade 68, as it will become apparent below. As such, the diameter of the drive rollers 58, 60 may be adjusted according to the thickness of the blade 68. However, where such adjustment occurs, the diameter of the first drive roller 58 preferably remains similar the diameter of the second drive roller 60 for the driving speed of the rollers 58 and 60 to remain identical. Because the spur gear housing 114 can pivot along the axis R¹-R¹, the distance 256 between the curved faces 238,250 of the drive rollers 58, 60 can be modified as the saw 20 is operated, as it will become apparent below.

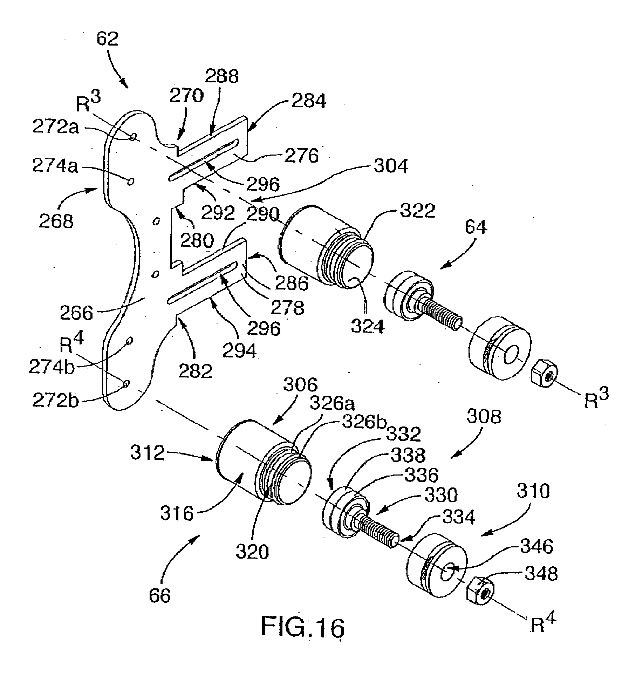

Turning to FIG. 16 the guide wheels mounting plate 62 enables mounting the guide wheels assemblies 64, 66 to the frame 26. The mounting plate 62 comprises a generally flat, vertically extending wheel mounting portion 266 having a front end and 268 a back end 270. The wheel mounting portion 266 comprises two pairs or vertically aligned, spaced-apart holes 272a, 272b and 274a, 274b for mounting the guide wheels assemblies 64, 66 to the plate 62.

Extending backwardly from the back end 270 of the vertical wheel mounting portion 266 is a pair of vertically spaced apart fastening portions 276, 278. Each fastening portion 276, 278 comprises a front end 280, 282 in connection with the back end 270 of the wheel mounting portion 266, a back edge 284, 286 a top edge 288, 290 and bottom edges 292, 294. Extending between the front end 280 and the back edge 284, each fastening portion 276, 278, is provided with an elongated slot 296, 298. The slots 296,298 are adapted for receiving therein threaded fasteners for mounting the plate 62 to the frame 26. More specifically, each fastener is slid through a corresponding slot 296 or 298 of the plate 62, through a corresponding hole 300 or 302 on the front end 40 of the frame 26 and property secured with a bolt.

Defined between the mounting portions 276, 278 (i.e. between the bottom edge 292 of mounting portion 276 and the top edge 290 of mounting portion 278) is an opening 304 adapted for receiving therein the mounting block 56 when the plate 62 is mounted to the frame 26. The presence of the elongated slots 296, 298 and of the opening 304 thus enables front and back adjustment of the plate 60 position relative to the frame 26 for positioning the blade 68 between the drive rollers 58, 60 and maintain proper contact therewith, as is will become apparent below.

Referring to FIGS. 14 to 17, the guide wheels assemblies 64, 66 will be described. The wheels assemblies 64, 66 being similar, only assembly 66 will be described. A person skilled in the art will appreciate that a similar description also applies to assembly 64. The guide wheel assembly 66 comprises a cylindrical spacer 306 adjacent to the mounting plate 62, a bearing assembly 308 operatively mounted in the spacer 306 and a guide wheel 310 operatively mounted to the bearing assembly 309.

More specifically, the spacer 306 comprises a left end 312 adjacent to the mounting plate 62 and an opposed right end 314 receivable in the guide wheel 310 as it will become apparent below. The spacer 306 defines a cylindrical main body 316 extending from the left end 312 to an intermediate region 318 and an annular bearing receiving portion 320 concentrically extending from the intermediate region 318 to the front end 314. Axially extending through the main body 316, from the left end 312 of the spacer 306 is a threaded bore (not shown) adapted for receiving therein a threaded fastener for mounting the spacer 306 to the mounting plate 260.

The annular bearing portion 320 comprises a curved outer face 322 having a diameter D³ and a curved inner face 324 having a smaller diameter D⁴ defining a seat 326 for the bearing assembly 308. Defined on the outer face 322 is a pair of annular recess for receiving therein a corresponding par of O-rings 326a, 326b. Defined in the inner face 324 is also an annular recess (not shown) adapted for receiving therein an open-ended or penannular ring (not shown) for securing the bearing assembly 308 in the seat 326.

The bearing assembly 308 comprises a cylindrical shaft 330 having a back end 332 and a threaded right end 334, and a pair of bearings 336, 338 mounted to the left end 332 of the shaft 330, in a side-by-side relationship. Once in position in the seat 326 of the spacer 306 the bearings 336, 338 are located behind the annular recess (not shown) of the inner face 324 and lie against the open-ended ring (not shown). The right threaded end 334 of the shaft 330 protrudes rightwardly from the right end 314 of the spacer 306 for enabling mounting the guide wheel 310 to the shaft 330.

The guide wheel 310 comprises a left face annular face 340, a right circular face 342 and a curved face extending therebetween. The guide wheel 310 further comprises a cylindrical seat (not shown) concentrically defined in the left face 340, adapted for receiving therein the annular bearing portion 318 of the spacer 306, and a cylindrical hole 346 extending from the seat (not shown) to the right face 342. Once assembled to the bearing assembly 308 and on the spacer 306, the bearing portion 318 of the spacer 306 is received in the seat (not shown) of the guide wheel 310 and the treaded right end 334 of the shaft 330 extends through the hole 346, protruding slightly from the right face 342 of the guide wheel 310. A bolt 348 is fastened to the threaded end 334 of the shaft 330 and lies against the right face 342, therefore securing the guide wheel 310 to the shaft 330. As the assembly 264 is provided with bearings, the guide wheel 310 can freely rotate about an axis R³-R³_{.}

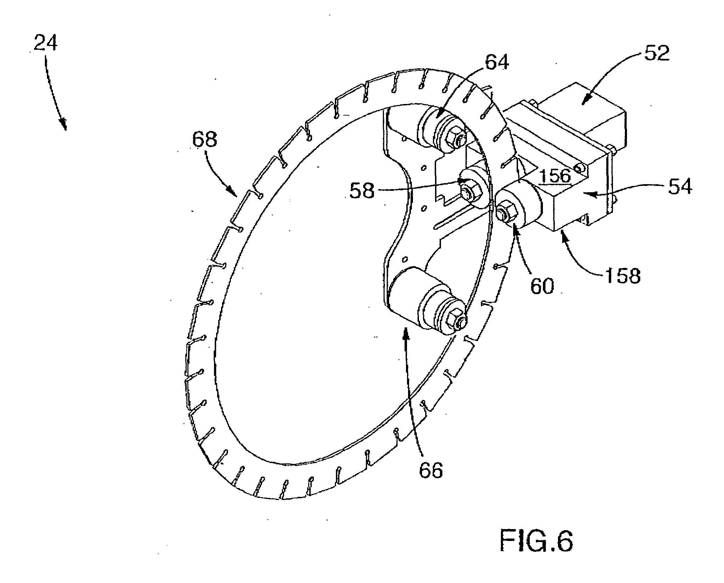

An annular recess 350 is defined in the curved face 344 of the guide wheel 310 for receiving a portion of the blade 68 therein. This recess 350 defines a shoulder aimed at preventing the blade 68 from moving laterally during operation of the saw. As best shown in FIGS. 14 and 15, the recess 350 of the first guide wheel 310 is vertically aligned with the recess 350 of the other guide wheel 310. Further, the recesses 350 of both guide wheels 310 are aligned with the drive rollers 58, 60 such that the blade 68 can be operatively received therebetween (best shown in FIG. 6).

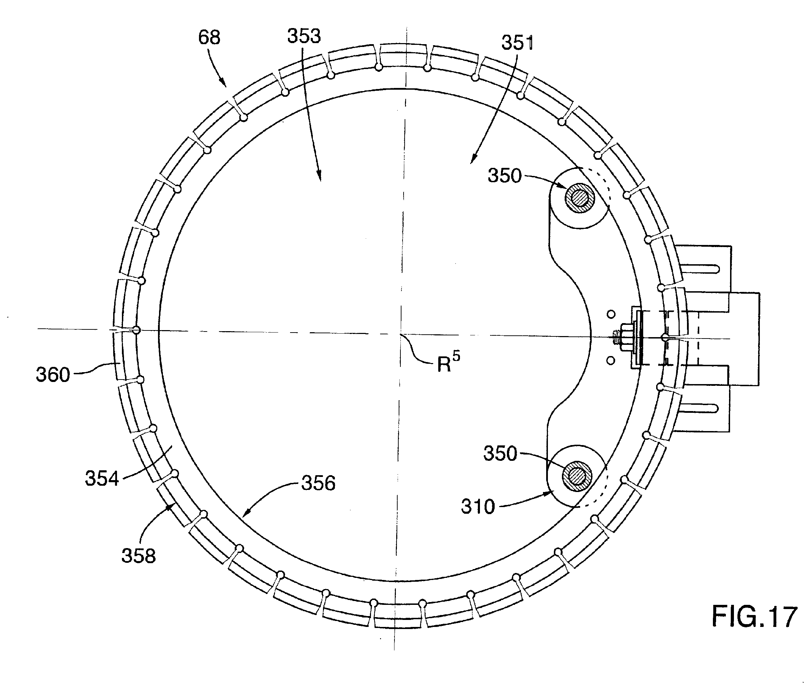

With reference to FIGS. 5 and 17, the annular blade 68 will now be described. The blade 68 comprises left and right annular faces 352, 354 respectively a circular inner edge 356 and a circular outer edge 358. Defined on or projecting radially from the outer edge 358 is a plurality of carbide or diamond teeth 360 adapted for cutting materials such as concrete, asphalt, wood and the like. In one embodiment, the left face 352 of the blade 68 provided with is a circular recess 362. The recess 362 is adapted for receiving therein the annular protrusion 242 of the drive roller 60. The blade 68 defines a first, backward hemisphere 351 (i.e. behind the virtual rotation axis R⁵-R⁵, proximal to the drive rollers 58, 60) and a second, frontward hemisphere 353 (i.e. in front the virtual rotation axis R⁵-R⁵).

Once assembled on the saw 20, the inner edge 356 of the blade 68 is received in the recesses 350 of the guide wheels 310, (best shown in FIG. 17) and is sandwiched between the drive rollers 58, 60 (best shown in FIGS. 4, 6, and 10). More specifically, the curved face 238 of the drive roller 58 contacts the left face 352 of the blade 68, the annular protrusion 242 extending in the circular recess 362, while the curved face 250 of the roller 60 contacts the right face 350 of the blade 68. The presence of the spring 258 ensures that a proper contact is maintained between the drive rollers 58, 60 and the faces 350, 352 of the blade 68 during the operation of the saw 20.

As the guide wheels 310, are located proximal to the drive rollers 58, 60 (i.e. in the first, backward hemisphere), the major portion of the blade 68 can be used for cutting. More specifically, the guide wheels 310 are located behind the rotation axis R⁵-R⁵ of the blade 68. This provides the saw 20 with cutting capabilities extending beyond the rotation axis R⁵-R⁵ of the blade 68, which may not be possible with saws of the prior art, where a driving shaft extends along the rotation axis of the blade and prevents the blade from cutting beyond the rotation axis of the blade.

Having described the general components of the saw 20, the assembly of the blade 68 to the saw 20 and its operation will now be described. The threaded fasteners, of the guide wheels mounting plate 260 are first loosen, therefore allowing the mounting plate 62, and the guide wheel assemblies 64, 66 mounted thereto to be moved frontwardly by the operator. The operator removes the drive roller 60 to install the blade 68. The operator positions the blade 68 adjacent to the drive roller 58 and aligns the recess 362 of the blade 68 with the protrusion 242 of the drive roller 58. The operator then reinstall the drive roller 60 by forcing the right end of the spur gear box housing 114 upwardly, thereby increasing the distance 56 between the rollers 58,60 (as shown in FIG. 15). Once the roller 60 is operatively installed, the right end of the spur gear housing 114 is released downwardly (as shown in FIG. 14). In this position, the curved faces 238, 250 of the drive rollers 58, 60 contact the left and front faces 352, 354 of the blade 68 and the protrusion 242 extends in the recess 362.

Once the blade 68 is properly positioned between the drive rollers 58, 60, the guide wheel mounting plate 62 is slid backwardly until the inner edge 356 of the blade 68 is received in the recesses 350 of the guide wheels 310. The fasteners of the guide wheels mounting plate 62 are then fastened to maintain the position of the guide wheel mounting plate 260 relative to the frame 26 during the operation of the saw 20.

A person skilled in the art will appreciate that this configuration of the guide wheels enables using blades having different configurations, for instance blades having different diameters. In one embodiment, the blade has an inner diameter (i.e. the diameter defined by the inner curved edge) ranging from about 10 inches and 20 inches and an outer diameter ranging from about 3 to about 50 inches, preferably between about 5 and 24 inches, and more preferably between about 10 to 20 inches. Where the inner diameter of the blade 68 is smaller, it may be desirable to rearrange the guide wheel assemblies 64, 66 in a compact configuration. In such a compact configuration, the guide wheel assemblies are unsecured from the first pair of holes 272a, 272b of the guide wheel mounting plate 62, and secured in the second pair of holes 274a, 274b, thereby positioning the guide wheel assemblies closer from one another.

The blade 68 being now in position between the drive rollers 58, 60 and the guide wheel assemblies 64, 66, the saw 20 can be operated. The motor of the drive assembly is actuated and speed thereof is controlled by the operator. The motor causes the drive shaft coupled to the motor to rotate, which in turn causes the pulleys 50 attached thereto to drive rotation of the pulley 102, The first bevel gear 92, is rotated by the action of the second pulley 102, causing the bevel gear 94, to rotate and to drive countersense rotation of the spur gears 116, 118. More specifically, the spur gear 116 rotates counterclockwise while the spur gear 118 rotates clockwise, therefore driving the rollers 58, 60 to rotate accordingly in a 1:1 ratio.

The curved faces 238, 250 of the drive rollers 58, 60 frictionally engage the left and right faces 352, 354 of the blade 68 for causing rotation thereof about the virtual axis R⁵R⁵. The protrusion 242 of the drive roller 58 engaged in the recess 362 of the blade enhances the frictional engagement of the roller 58 with the blade 68, thus increasing the efficiency of the drive rollers 58, 60 and providing the saw 20 with sufficient torque for enabling cutting action beyond the virtual axis R⁵-R⁵. Further, the protrusion 242 engaged in the recess 362 prevents the blade 68 from moving backwardly during the operation of the saw 20, which backward movement of the blade 68 could damage the other components of the saw (e.g. the spur gear housing 114 located behind the blade). In an alternate embodiment, the blade 68 may be provided with one recess on each of its faces 352, 354 (i.e. one recess on the left face 352 and one recess of the right face 354) and both rollers 58, 60 may be provided with annular protrusions similar to protrusion 242. In a further alternate embodiment, the curved faces 238 ,250 of the drive rollers 58, 60 could be layered with rubber or the like to further enhance frictional engagement with the blade 68.

As it will be apparent for a person skilled in the art, the countersense rotation of the rollers 58, 60 will cause the blade 68 to rotate counterclockwise in this configuration (when seen from the right side of the saw 20 as shown in FIG. 6). This person will appreciate that the saw could be configured differently for the blade to rotate clockwise.

## Claims

1. A centerless cutting assembly (24) comprising:
- a frame (26);
- at least a first and a second drive rollers (58, 60) mounted to said frame (26) for rotation about first and second parallel rotation axes;
- an annular blade (68) mounted between said first and second drive rollers (58,60) and frictionally engaged thereby, said annular blade defining frontward and backward hemispheres (351, 353);
- at least two guide wheels (310) mounted to said frame (26), said guide wheels operatively engaging the inner circular edge of the annular blade (68); and
- a drive assembly mounted to said frame (26) for urging rotation of said first and second drive rollers (58, 60), thereby urging rotation of said annular blade (68);
**characterized in that** said guide wheels are positionned in said backward hemisphere of said annular blade, and said drive assembly comprises a motor and a transmission operatively coupled to said motor, said-transmission comprising a spur gear assembly (54) for operatively connecting said first and second drive rollers (58, 60) to said motor, said spur gear assembly (54) comprising a housing (114), a first spur gear (116) operatively connected to said motor and to said first drive roller (58) for rotation about said first rotation axis and a second spur gear (118) operatively connected to said second drive roller (60), said second spur gear (118) operatively engaging said first spur gear (116) such that rotation thereof drives countersense rotation of said second spur gear (118) about said second rotation axis, wherein said spur gear assembly (54) is pivotably mounted to said frame (26) for pivoting between an upper position and a lower position, upwardly and downwardly between an upper position and a lower position, said transmission further comprising a spring (258) mounted to the housing (114) and to the frame (26), the spring (258) help maintaining the housing (114) in its lower position, thereby ensuring proper contact between drive rollers (58, 60) and the blade (68).

2. The centerless cutting assembly of claim 1, wherein said cutting assembly (24) is comprised in a handheld saw device (20).

3. The centerless cutting assembly of claim 1, wherein said cutting assembly (24) is comprised in a table saw device.

4. The centerless cutting assembly of claim 1, wherein said cutting assembly (24) is comprised in a compound saw device.

5. The centerless cutting assembly of claim 1, wherein said transmission is adapted for driving a countersense rotation of said drive rollers (58, 60) in a 1:1 ratio.

6. The centerless cutting assembly of claim 1, wherein said motor is selected from a group consisting of a gas motor, an electric motor and a hydraulic motor.

7. The centerless cutting assembly of claim 1, wherein said transmission further comprises a bevel gear assembly (52) for operatively connecting said first spur gear (116) to said motor.

8. The centerless cutting assembly of claim 1, wherein the frame (26) extends at a distance from said frontward hemisphere (353)

9. The centerless cutting assembly of claim 1, wherein said inner circular edge of the annular blade (68) is in contact with said guide wheels (310) proximal to the drive rollers (58, 60).

10. A centerless saw device (20) comprising:
- a frame (26);
- at least a first and a second drive rollers (58, 60) mounted to said frame for rotation about first and second parallel rotation axes, said first and second rollers being positioned to define a space (256) therebetween and being operable to rotate countersense from one another about, each of said first and second drive rollers (58,60) comprising a curved face (238, 250);
- an annular blade (68) mounted between said curved faces (238, 250) of said drive rollers (58, 60), said annular blade comprising a first annular face (352), a second opposed annular face (354), an inner curved edge (356) and an outer curved edge (358), said curved face of said first roller frictionally engaging said first face of said annular blade and said second roller frictionally engaging said second face of said annular blade for driving said rotation of said annular blade about a third rotation axis, perpendicular to said first and second rotation axes;
- at least two guide wheels (310) mounted to said frame (26), said guide wheels being rotatable about fourth and fifth rotation axes parallel to said third rotation axis: and
- a drive assembly (22) mounted to said frame and operable for urging the countersense rotation of said at least first and second drive rollers (58, 60);
**characterized in that** said said drive assembly comprises a motor and a transmission operatively coupled to said motor, said-transmission comprising a spur gear assembly (54) for operatively connecting said first and second drive rollers (58, 60) to said motor, said spur gear assembly (54) comprising a housing (114), a first spur gear (116) operatively connected to said motor and to said first drive roller (58) for rotation about said first rotation axis and a second spur gear (118) operatively connected to said second drive roller (60), said second spur gear (118) operatively engaging said first spur gear (116) such that rotation thereof drives countersense rotation of said second spur gear (118) about said second rotation axis, wherein said spur gear assembly (54) is pivotably mounted to said frame (26) for pivoting between an upper position and a lower position, upwardly and downwardly between an upper position and a lower position, said transmission further comprising a spring (258) mounted to the housing (114) and to the frame (26), the spring (258) help maintaining the housing (114) in its lower position, thereby ensuring proper contact between drive rollers (58, 60) and the blade (68), said at least two guide wheels (310) are mounted to said frame (26) between said third rotation axis and said drive rollers, whereby said inner curved edge (356) of the annular blade (68) is in contact with guide wheels proximal to the drive rollers (58, 60), each guide wheel comprises an annular recess (350) aligned with said space (256) defined between said drive rollers (58, 60) and receiving therein said inner edge (356) of said annular blade (68).

11. The saw device of claim 11, wherein said annular blade (68) comprises at least one circular recess (362) defined in at least one of said first and second face (352, 354) and at least one of said first and second drive roller (58, 60) comprises an annular protrusion (242) extending from said curved face, said protrusion being receivable in said circular recess of said annular blade.

## Patentansprüche

1. Spitzenlose Schneideanordnung, umfassend
- einen Rahmen (26);
- mindestens eine erste und eine zweite Antriebsrolle (58, 60), die auf den Rahmen (26) montiert sind, um sich um erste und zweite parallele Rotationsachsen zu drehen;
- eine ringförmige Klinge (68), die zwischen der ersten und der zweiten Antriebsrolle (58, 60) montiert und dadurch reibschlüssig eingegriffen ist, wobei die ringförmige Klinge nach vorne gerichtete und nach hinten gerichtete Halbkugeln (351, 353) definiert,
- mindestens zwei Führungsräder (310), die auf den Rahmen (26) montiert sind, wobei die Führungsräder im Betrieb die innere kreisförmige Kante der ringförmigen Klinge (68) eingreifen; und
- eine Antriebsanordnung, die an den Rahmen (26) befestigt ist, um die Rotation der ersten und der zweiten Antriebsrolle (58, 60) hervorzurufen, wodurch die Rotation der ringförmigen Klinge (68) hervorgerufen wird;
**dadurch gekennzeichnet, dass** die Führungsräder in der nach hinten gerichteten Halbkugel der ringförmigen Klinge positioniert sind, und die Antriebsanordnung einen Motor und ein Getriebe umfasst, das im Betrieb an den Motor gekoppelt ist, wobei das Getriebe eine Geradstirnrad-Anordnung (54) umfasst, um im Betrieb die erste und die zweite Antriebsrolle (58, 60) mit dem Motor zu verbinden, wobei die Geradstirnrad-Anordnung (54) ein Gehäuse (114) umfasst, ein erstes Geradstirnrad (116), das im Betrieb mit dem Motor und mit der ersten Antriebsrolle (58) verbunden ist, um sich um die erste Rotationsachse zu drehen, und ein zweites Geradstirnrad (118), das im Betrieb mit der zweiten Antriebsrolle (60) verbunden ist, wobei das zweite Geradstirnrad (118) im Betrieb das erste Geradstirnrad (116) eingreift, so dass die Rotation davon die Rotation im Gegensinn des zweiten Geradstirnrads (118) um die zweite Rotationsachse antreibt, wobei die Geradstirnrad-Anordnung (54) drehbar an den Rahmen (26) montiert ist, um sich zwischen einer oberen Position und einer unteren Position nach oben und nach unten zwischen einer oberen Position und einer unteren Position zu drehen, wobei das Getriebe weiter eine Feder (258) umfasst, die an das Gehäuse (114) und an den Rahmen (26) montiert ist, wobei die Feder (258) dabei hilft, das Gehäuse (114) in seiner unteren Position zu halten, wodurch ein geeigneter Kontakt zwischen den Antriebsrollen (58, 60) und der Klinge (68) sichergestellt wird.

2. Spitzenlose Schneideanordnung nach Anspruch 1, wobei die Schneideanordnung (24) in einer Hand-Sägevorrichtung (20) enthalten ist.

3. Spitzenlose Schneideanordnung nach Anspruch 1, wobei die Schneideanordnung (24) in einer Tisch-Sägevorrichtung enthalten ist.

4. Spitzenlose Schneideanordnung nach Anspruch 1, wobei die Schneideanordnung (24) in einer Verbund-Sägevorrichtung enthalten ist.

5. Spitzenlose Schneideanordnung nach Anspruch 1, wobei das Getriebe ausgelegt ist, um eine Rotation im Gegensinn der Antriebsrollen (58, 60) in einem Verhältnis 1:1 anzutreiben.

6. Spitzenlose Schneideanordnung nach Anspruch 1, wobei der Motor ausgewählt ist aus einer Gruppe, bestehend aus einem Gasmotor, einem elektrischen Motor und einem hydraulischen Motor.

7. Spitzenlose Schneideanordnung nach Anspruch 1, wobei das Getriebe weiter eine Kegelrad-Anordnung (52) umfasst, um im Betrieb das erste Geradstirnrad (116) mit dem Motor zu verbinden.

8. Spitzenlose Schneideanordnung nach Anspruch 1, wobei sich der Rahmen (26) in einem Abstand von der nach vorne gerichteten Halbkugel (353) erstreckt.

9. Spitzenlose Schneideanordnung nach Anspruch 1, wobei die innere kreisförmige Kante der ringförmigen Klinge (68) mit den Führungsrädern (310) proximal zu den Antriebsrollen (58, 60) in Kontakt steht.

10. Spitzenlose Schneideanordnung (20), umfassend
- einen Rahmen (26);
- mindestens eine erste und eine zweite Antriebsrolle (58, 60), die auf den Rahmen montiert sind, um sich um erste und zweite parallele Rotationsachsen zu drehen, wobei die erste und die zweite Rolle positioniert sind, um einen Raum (256) dazwischen zu definieren, und betriebsbereit ist, um im Gegensinn voneinander zu drehen, wobei jede der ersten und der zweiten Antriebsrolle (58, 60) eine gekrümmte Seite (238, 250) umfasst;
- eine ringförmige Klinge (68), die zwischen den gekrümmten Seiten (238, 250) der Antriebsrollen (58, 60) montiert ist, wobei die ringförmige Klinge eine erste ringförmige Seite (352) umfasst, eine zweite, gegenüber liegende ringförmige Seite (354), eine innere gekrümmte Kante (356), und eine äußere gekrümmte Kante (358), wobei die gekrümmte Seite der ersten Rolle reibschlüssig die erste Seite der ringförmigen Klinge eingreift, und die zweite Rolle reibschlüssig die zweite Seite der ringförmigen Klinge eingreift, um die Rotation der ringförmigen Klinge um eine dritte Rotationsachse anzutreiben, die senkrecht zur ersten und zweiten Rotationsachse ist;
- mindestens zwei Führungsräder (310), die auf den Rahmen (26) montiert sind, wobei die Führungsräder um vierte und fünfte Rotationsachsen gedreht werden können, die parallel zur dritten Rotationsachse sind; und
- eine Antriebsanordnung (22), die auf den Rahmen montiert ist und betriebsbereit ist, um die Rotation der mindestens ersten und zweiten Antriebsrolle (58, 60) im Gegensinn hervorzurufen,
**dadurch gekennzeichnet, dass** die Antriebsanordnung einen Motor und ein Getriebe umfasst, das im Betrieb an den Motor gekoppelt ist, wobei das Getriebe eine Geradstirnrad-Anordung (54) umfasst, um im Betrieb die erste und die zweite Antriebsrolle (58, 60) mit dem Motor zu verbinden, wobei die Geradstirnrad-Anordnung (54) ein Gehäuse (114) umfasst, ein erstes Geradstirnrad (116), das im Betrieb mit dem Motor und mit der ersten Antriebsrolle (58) verbunden ist, um sich um die erste Rotationsachse zu drehen, und ein zweites Geradstirnrad (118), das im Betrieb mit der zweiten Antriebsrolle (60) verbunden ist, wobei das zweite Geradstirnrad (118) im Betrieb das erste Geradstirnrad (116) eingreift, so dass die Rotation davon die Rotation im Gegensinn des zweiten Geradstirnrads (118) um die zweite Rotationsachse antreibt, wobei die Geradstirnrad-Anordnung (54) drehbar an den Rahmen (26) montiert ist, um sich zwischen einer oberen Position und einer unteren Position nach oben und nach unten zwischen einer oberen Position und einer unteren Position zu drehen, wobei das Getriebe weiter eine Feder (258) umfasst, die an das Gehäuse (114) und an den Rahmen (26) montiert ist, wobei die Feder (258) dabei hilft, das Gehäuse (114) in seiner unteren Position zu halten, wodurch ein geeigneter Kontakt zwischen den Antriebsrollen (58, 60) und der Klinge (68) sichergestellt wird, die mindestens zwei Führungsräder (310), auf den Rahmen (26) montiert sind, zwischen der dritten Rotationsachse und den Antriebsrollen, wobei die innere kreisförmige Kante (356) der ringförmigen Klinge (68) mit Führungsrädern proximal zu den Antriebsrollen (58, 60) in Kontakt steht, wobei das Führungsrad eine ringförmige Aussparung (350) umfasst, die mit dem Raum (256) ausgefluchtet ist, der zwischen den Antriebsrollen (58, 60) definiert ist, und darin die innere Kante (356) der ringförmigen Klinge (68) aufnimmt.

11. Sägevorrichtung nach Anspruch 11, wobei die ringförmige Klinge (68) mindestens eine kreisförmige Aussparung (352) aufweist, die in mindestens einer der ersten und der zweiten Seite (352, 354) definiert ist, und mindestens eine der ersten und der zweiten Antriebsrolle (58, 60) einen ringförmigen Vorsprung (242) umfasst, der sich von der gekrümmten Seite erstreckt, wobei der Vorsprung in der kreisförmigen Aussparung der ringförmigen Klinge aufgenommen werden kann.

## Revendications

1. Ensemble de coupe sans centre (24) comprenant :
un châssis (26) ;
au moins des premier et deuxième rouleaux d'entraînement (58, 60) montés sur ledit châssis (26) pour tourner autour de premier et deuxième axes de rotation parallèles ;
une lame annulaire (68) montée entre lesdits premier et deuxième rouleaux d'entraînement (58, 60) et engagée ainsi par friction, ladite lame annulaire définissant des hémisphères avant et arrière (351, 353) ;
au moins deux roues de guidage (310) montées sur ledit châssis (26), lesdites roues de guidage s'engageant de manière fonctionnelle avec le bord circulaire interne de la lame annulaire (68) ; et
un ensemble d'entraînement monté sur ledit châssis (26) pour solliciter la rotation desdits premier et deuxième rouleaux d'entraînement (58, 60), sollicitant ainsi la rotation de ladite lame annulaire (68) ;
**caractérisé en ce que** lesdites roues de guidage sont positionnées dans ledit hémisphère arrière de ladite lame annulaire, et ledit ensemble d'entraînement comprend un moteur et une transmission couplée de manière fonctionnelle audit moteur, ladite transmission comprenant un ensemble d'engrenages droits (54) pour relier de manière fonctionnelle lesdits premier et deuxième rouleaux d'entraînement (58, 60) audit moteur, ledit ensemble d'engrenages droits (54) comprenant un boîtier (114), un premier engrenage droit (116) relié de manière fonctionnelle audit moteur et audit premier rouleau d'entraînement (58) pour tourner autour dudit premier axe de rotation et un deuxième engrenage droit (118) relié de manière fonctionnelle audit deuxième rouleau d'entraînement (60), ledit deuxième engrenage droit (118) s'engageant de manière fonctionnelle avec ledit premier engrenage droit (116) de sorte qu'une rotation de celui-ci entraîne une rotation en sens inverse dudit deuxième engrenage droit (118) autour dudit deuxième axe de rotation, où ledit ensemble d'engrenages droits (54) est monté en pivotement sur ledit châssis (26) pour pivoter entre une position supérieure et une position inférieure, vers le haut et vers le bas entre une position supérieure et une position inférieure, ladite transmission comprenant en outre un ressort (258) monté sur le boîtier (114) et sur le châssis (26), le ressort (258) aide à maintenir le boîtier (114) dans sa position inférieure, assurant ainsi un contact approprié entre des rouleaux d'entraînement (58, 60) et la lame (68).

2. Ensemble de coupe sans centre de la revendication 1, dans lequel ledit ensemble de coupe (24) est inclus dans un dispositif de scie portatif (20).

3. Ensemble de coupe sans centre de la revendication 1, dans lequel ledit ensemble de coupe (24) est inclus dans un dispositif de scie à table.

4. Ensemble de coupe sans centre de la revendication 1, dans lequel ledit ensemble de coupe (24) est inclus dans un dispositif de scie composé.

5. Ensemble de coupe sans centre de la revendication 1, dans lequel ladite transmission est adaptée pour entraîner une rotation en sens inverse desdits rouleaux d'entraînement (58, 60) dans un rapport de 1 : 1.

6. Ensemble de coupe sans centre de la revendication 1, dans lequel ledit moteur est choisi dans un groupe constitué d'un moteur à gaz, d'un moteur électrique et d'un moteur hydraulique.

7. Ensemble de coupe sans centre de la revendication 1, dans lequel ladite transmission comprend en outre un ensemble d'engrenages coniques (52) pour relier de manière fonctionnelle ledit premier engrenage droit (116) audit moteur.

8. Ensemble de coupe sans centre de la revendication 1, dans lequel le châssis (26) s'étend à une distance dudit hémisphère avant (353).

9. Ensemble de coupe sans centre de la revendication 1, dans lequel ledit bord circulaire interne de la lame annulaire (68) est en contact avec lesdites roues de guidage (310) à proximité des rouleaux d'entraînement (58, 60).

10. Dispositif de scie sans centre (20) comprenant :
un châssis (26) ;
au moins des premier et deuxième rouleaux d'entraînement (58, 60) montés sur ledit châssis pour tourner autour de premier et deuxième axes de rotation parallèles, lesdits premier et deuxième rouleaux étant positionnés pour définir un espace (256) entre eux et pouvant fonctionner pour tourner en sens inverse l'un par rapport à l'autre, chacun desdits premier et deuxième rouleaux d'entraînement (58, 60) comprenant une face incurvée (238, 250) ;
une lame annulaire (68) montée entre lesdites faces incurvées (238, 250) desdits rouleaux d'entraînement (58, 60), ladite lame annulaire comprenant une première face annulaire (352), une deuxième face annulaire opposée (354), une bord incurvé interne (356) et un bord incurvé externe (358), ladite face incurvée dudit premier rouleau s'engageant par friction avec ladite première face de ladite lame annulaire et ledit deuxième rouleau s'engageant par friction avec ladite deuxième face de ladite lame annulaire pour entraîner ladite rotation de ladite lame annulaire autour d'un troisième axe de rotation, perpendiculaire aux dits premier et deuxième axes de rotation ;
au moins deux roues de guidage (310) montées sur ledit châssis (26), lesdites roues de guidage pouvant tourner autour de quatrième et cinquième axes de rotation parallèles audit troisième axe de rotation ; et
un ensemble d'entraînement (22) monté sur ledit châssis et pouvant fonctionner pour solliciter la rotation en sens inverse desdits au moins premier et deuxième rouleaux d'entraînement (58, 60) ;
**caractérisé en ce que** ledit ensemble d'entraînement comprend un moteur et une transmission couplée de manière fonctionnelle audit moteur, ladite transmission comprenant un ensemble d'engrenages droits (54) pour relier de manière fonctionnelle lesdits premier et deuxième rouleaux d'entraînement (58, 60) audit moteur, ledit ensemble d'engrenages droits (54) comprenant un boîtier (114), un premier engrenage droit (116) relié de manière fonctionnelle audit moteur et audit premier rouleau d'entraînement (58) pour tourner autour dudit premier axe de rotation et un deuxième engrenage droit (118) relié de manière fonctionnelle audit deuxième rouleau d'entraînement (60), ledit deuxième engrenage droit (118) s'engageant de manière fonctionnelle avec ledit premier engrenage droit (116) de sorte qu'une rotation de celui-ci entraîne une rotation en sens inverse dudit deuxième engrenage droit (118) autour dudit deuxième axe de rotation, où ledit ensemble d'engrenages droits (54) est monté en pivotement sur ledit châssis (26) pour pivoter entre une position supérieure et une position inférieure, vers le haut et vers le bas entre une position supérieure et une position inférieure, ladite transmission comprenant en outre un ressort (258) monté sur le boîtier (114) et sur le châssis (26), le ressort (258) aide à maintenir le boîtier (114) dans sa position inférieure, assurant ainsi un contact approprié entre des rouleaux d'entraînement (58, 60) et la lame (68), lesdites au moins deux roues de guidage (310) sont montées sur ledit châssis (26) entre ledit troisième axe de rotation et lesdits rouleaux d'entraînement, grâce à quoi ledit bord incurvé interne (356) de la lame annulaire (68) est en contact avec des roues de guidage à proximité des rouleaux d'entraînement (58, 60), chaque roue de guidage comprend un évidement annulaire (350) aligné avec ledit espace (256) défini entre lesdits rouleaux d'entraînement (58, 60) et recevant dedans ledit bord interne (356) de ladite lame annulaire (68).

11. Dispositif de scie de la revendication 11, dans lequel ladite lame annulaire (68) comprend au moins un évidement circulaire (362) défini dans au moins l'une desdites première et deuxième faces (352, 354) et au moins l'un desdits premier et deuxième rouleaux d'entraînement (58, 60) comprend une saillie annulaire (242) s'étendant à partir de ladite face incurvée, ladite saillie pouvant être reçue dans ledit évidement circulaire de ladite lame annulaire.
